# EUROPEAN PATENT SPECIFICATION

(11) **EP 3 182 001 B1**
(45) Date of publication and mention of the grant of the patent: **08.04.2020**
(21) Application number: 16203878.0
(22) Date of filing: 13.12.2016
(51) Int. Cl.: F21V 21/03, H01R 33/94

(54) **LIGHT FITTING**
LEUCHTENFASSUNG
LUMINAIRE

(30) Priority: 14.12.2015 GB 201521985
(43) Date of publication of application: 21.06.2017
(73) Proprietor: Next Retail Limited, Leicester, Leicestershire LE19 4AT (GB)
(72) Inventor: STANTON, Tim, Leicester, Leicestershire LE19 4AT (GB)
(74) Representative: Lamb, Martin John Carstairs

(56) References cited:
- EP-A1- 1 456 914
- EP-A1- 2 631 535
- WO-A1-95/34783
- DE-U1-202015 001 170
- GB-A- 1 098 680
- US-A- 3 193 636
- US-A- 3 638 170
- US-A- 4 360 243
- US-A- 5 551 882
- US-A1- 2008 285 291
- US-A1- 2009 035 988

## Description

### FIELD

The present invention relates to an electrical fitting for a light.

### BACKGROUND

To attach an electrical device, such as a light, to a ceiling, a user is required to provide an electrical connection between the light and the domestic power supply. In order to support the light, a mechanical connection between the light and the ceiling is required, such that the light can be suspended from the ceiling.

Typically, a light comes with a light fitting to be electrically and mechanically connected to the ceiling. These two connections are typically made separately. First, a user will electrically connect the domestic power supply to the light fitting by connecting wires in the ceiling to the light fitting. Once the electrical connection is made, the user then mechanically connects the light fitting to the ceiling. This can be tricky, since a user needs to support the weight of the light, while attaching the light fitting to the ceiling.

It is often difficult to support the light, which may be bulky and heavy, while trying to provide the electrical connection between the light and the domestic supply and to attach the light fitting to the ceiling. While a user is attaching the light fitting to the ceiling, they must be careful not to break the electrical connection. For larger, heavier lights, this is a time consuming job which may require more than one person.

US2009/035988 discloses a conversion connector supporting a suspended lamp, and which can threadily engage within the socket of a recessed lighting fixture, provides for an instant conversion of a recessed light or ceiling socket to a hanging lamp, for installation within any facility.

US3638170 discloses an electrical coupling mechanism adapted removably to suspend a lighting fixture from a ceiling structure of a building room; wherein a mounting plate is supported by a utility box; and a lighting fixture hanger is manually rotatably insertable through an opening in said mounting plate thereby concurrently making electrical and mechanical supporting connection for said lighting fixture whereby said lighting fixture and said hanger may be readily removed mechanically and electrically disconnected relative to structure and electrical contacts on said mounting plate.

DE202015001170U1 discloses a system for connecting an electrical module, typically a suspension module for lighting, in a wall with a hole.

US2008/285291 discloses a kit and method to convert a recessed incandescent lighting fixture to a hanging light fixture. The kit includes a lampholder adapter, an electrical plug, an electrical plug, a power cord and a cover plate for hanging light fixtures using incandescent light bulbs.

GB1098680 discloses a two-part detachable electric coupling comprising a first part consisting of a body 8 of insulating material moulded around a member 6, the connections 5 to the cable conductors and part of a insulating sheath 7.

US4360243 discloses an adapter for permitting a lamp to be threaded into a light socket while preventing damage to the socket through application of excessive threading force.

EP1456914 relates to the support of light electric appliances such as light fittings and small fans. The device provides a plug and socket combination powering and supporting an appliance in a manner allowing the user to change its orientation.

US5551882 provides an electrical connector constructed to mate with a connector of duplicate construction.

WO95/34783 A lamp unit having an electromechanical ball, the lamp unit being rotatable with respect to the conductor strips to provide on-off switching.

EP2631535 The present invention concerns a LED lighting device; the device is characterized in that the power supply means include first power supply means in rotatably joined relation to said first support element, second power supply means secured to said second support element, said first power supply means and said second power supply means being in electrical communication with each other, to supply power to said LED even when there is a seamless rotary movement of said first support element relative to said second support element.

US3193636 relates to a self-interlocking demountable swivel-type connector in which the internal contacts provide self-interlock features for the connector.

### SUMMARY OF INVENTION

According to an embodiment of the present invention is a light fitting according to claim 1.

A light fitting may be located between a wall and/or ceiling surface and a light apparatus. A light fitting may therefore be configured to mechanically connect the light apparatus to a surface and to electrically connect the light apparatus and a domestic electric supply.

A light, or light apparatus, as referred to herein, may comprise a bulb and bulb socket. A light may further comprise a decorative lamp shade or bulb support frame, as well as a means or device for suspending the bulb and any support frame a distance from the ceiling, for example an electrical cable. A light, or light apparatus may also comprise a power circuit for a light. The light fitting may be a part of a light.

The first part may be configured to mechanically and/or electrically connect to a surface, e.g. a wall or ceiling of a building. The first part may be mechanically and/or electrically connect to a surface, e.g. a wall or ceiling of a building. The first part may comprise a mechanical attachment means or device for attaching the first part to the surface. A first part according to an embodiment may be arranged to interface with existing mechanical fixing means for attaching lights in a house. The first part may therefore have a plurality of screw holes arranged to align with standard light fitting screw-hole placements. The first part may comprise an electrical interface for connecting the first part to a power supply. The electrical interface may be configured to releasably couple to a power supply. An electrical interface may comprise a standard arrangement of equipment used to connect a light fitting to a power supply (e.g. a domestic power supply).

When the first part is electrically connected to a domestic power supply, the first electrical connector may be electrically connected to the domestic power supply (e.g. via an electrical interface in the first part). The first electrical connector may be configured to engage the second electrical connector. The first electrical connector may be configured to cooperate with the second electrical connector to electrically connect the first and second parts.

The second part may be configured to be mechanically and/or electrically connected to a light. The second part may be mechanically and/or electrically connected to a light. The second part may be configured to be releasably attached to the first part. The second part may be configured to be releasably electrically and mechanically connected to the first part.

The second part comprises an electrical interface configured to be releasably coupled to a power supply circuit for a light. The second part may further comprise a mechanical interface for mechanically fixing the light (e.g. the bulb and/or support frame) relative to the second part.

The second part's electrical interface is configured to be releasably coupled to a power circuit for a light, i.e. it can be connected and disconnected without damaging the electrical interface or power circuit for the light significantly.

An electrical interface may comprise a plurality of electrical screw contacts, as may be present in electrical power sockets.

A power circuit for a light refers to the wiring or circuitry which provides power to the light or light bulb. It refers to the wiring often present as part of a light assembly and does not refer to the power supply cables provided as part of a building - i.e. the domestic power supply. It incorporates any known means for electrically connecting a light fitting to a light bulb. An example of electrical circuitry may be a power cable extending between the bulb and the light fitting.

The second electrical connector may be electrically connected to the electrical interface. This allows electrical power from the second electrical connector to pass to the light.

The second mechanical connector may be configured to engage the first mechanical connector in order to fix the first mechanical connector, or first part, relative to the second mechanical connector, or second part. The first and second mechanical connectors are said to be engaged as soon as the first and second parts cannot be separated simply by pulling the parts apart and the light can be supported by the light fitting.

The first and second electrical connectors are arranged to simultaneously engage automatically when the first and second mechanical connectors engage. The first and second electrical connectors are said to engage as the first and second mechanical connectors engage when they engage as part of the same movement. The light fitting may be arranged such that engaging the first and second mechanical connectors automatically engages the first and second electrical connectors. As such, when a user is connecting the first and second parts, there is no need for two separate steps for connecting the mechanical and electrical connectors respectively.

The first and second mechanical connectors may be arranged to cooperate such that the light can be electrically connected to a domestic electricity supply and supported by the light fitting.

An electrical connection between the first and second part can be provided when the second part is at one of a plurality of positions relative to the first part. As such, there may be a plurality of arrangements of the first and second parts in which the first and second mechanical and electrical connectors are engaged and the first and second parts are mechanically and electrically connected. An example of a plurality of positions may be a plurality of relative angular positions or orientations (for example the second part may be rotated between a first and second position relative to the first part and an electrical and mechanical connection between the first and second parts is provided at both positions).

In use, a user can attach the first part of the light fitting to a surface by wiring in the first part and mechanically attaching the first part to the surface. This first part can be connected on its own, so the user does not need to support the weight of the light while connecting the first part. The second part can be mechanically and electrically connected to the light. The second part can be wiredly connected to the light and can be mechanically fastened to the light. This can be done in a convenient manner, e.g. on a table top, since the light does not need to be held in situ while these connections are made. A user can then simply connect the first and second parts to finish installation of the light.

The first and second mechanical connectors may be arranged such that a simple engaging movement is required to connect the parts. Since the first and second parts are configured to connect in a very simple manner and separate steps of mechanically and electrically connecting the parts are not required, a user does not need to manually connect wiring or fix parts to the surface while supporting the light itself. The only operation required while supporting the light is to connect the first and second parts in a single simple action.

The first and second parts may be arranged to be rotatably engagable. The first and second mechanical connectors may be rotatably engagable.

One of the first and second mechanical connectors may comprise a screw thread. The other of the first and second mechanical connectors may comprise a screw thread or a protrusion configured to engage a screw thread. Alternatively, one of the first and second parts may comprise an arcuate slot and the other of the first and second parts may comprise a peg configured to engage the slot when the first and second parts are rotated relative to each other.

The first and second parts may be arranged such that a user can attach the first and second parts by screwing the second part onto the first part. The first and second mechanical connectors may be arranged such that the mechanical connectors can be engaged and disengaged by rotating the second part relative to the first part.

The axis of any rotation or angular position described herein may generally be perpendicular to the surface on which the light fitting is to be installed. As such, where the relative angular position, or orientation, of the second part with respect to the first part is discussed, this may refer to the relative rotation of the first and second parts about an axis perpendicular to a surface on which the first part may be mounted. In some embodiments, however, the axis of rotation may be parallel to, or at an oblique angle to a surface on which the fitting is to be attached.

The first part may comprise a visual indicator. The visual indicator may comprise a guide line. The visual indicator may be a visual indication provided on the first part, visible when the first part is attached to a surface. The visual indicator may extend along the length of or across a diameter of the first part.

The visual indicator may be arranged to provide an indication of the required orientation of the second part for providing an electrical connection between the first and second parts. The indicator may indicate the orientation of the second part when an electrical connection is provided between the first and second parts. For example, a guide line may be arranged on the first part to indicate the orientation of the second part when attached to the first part and electrically connected to the first part.

In certain embodiments the second part may be integral with a linear arrangement of spotlights. If the first mechanical connector is a single helix screw thread there is only one relative arrangement of the first and second parts at which the second mechanical connector (and hence the second part) is fully screwed onto the first part. Accordingly, it may be desirable to attach the first part to the ceiling such that the linear arrangement of spotlights, when the second part is fully engaged with the first part, is aligned along the length of a room, or above the length of a table. The visual indicator allows a user to orient the first part such that the second part, when connected to the first part, has the desired orientation within the room.

The visual indicator may comprise a plurality of guide lines or markers to indicate the plurality of orientations, or the range of orientations, of the second part relative to the first at which an electrical connection between the two parts may be provided.

The light fitting may be arranged such that an electrical connection between the first and second parts can be provided when the second part is at any of a plurality of angular positions, or orientations, relative to the first part.

The first and second electrical connectors may be configured such that an electrical connection between the first and second parts can be provided when the second electrical connector is at any of a plurality of angular positions relative to the first electrical connector (i.e. the second electrical connector may be rotated between a first and second position relative to the first electrical connector and an electrical and mechanical connection between the first and second parts is provided at both positions).

The light fitting may be arranged such that an electrical connection between the first and second parts can be provided when the second part or electrical connector is at any of a plurality of angular positions relative to the first part or electrical connector.

The light fitting may be configured such that the first and second parts do not need to be in a single specific orientation with respect to each other for an electrical connection to be provided between the first and second parts. The plurality of angular positions may be a continuous range of angular positions (i.e. the second part or electrical connector may be rotated between a first and second position relative to the first part or electrical connector, respectively, and an electrical and mechanical connection between the first and second parts is provided throughout the rotation). The light fitting may be configured such that the first and second electrical connectors do not need to be in a single specific orientation with respect to each other for an electrical connection to be provided between the first and second parts.

The first and second mechanical connectors may need to be engaged in order for an electrical connection to be made.

The above discussion relating to relative rotations between the first and second parts and electrical connectors applies, mutatis mutandis to relative translations.

The second part, or electrical connector, may be rotatable relative to the first part, or electrical connector, while the first and second parts are electrically connected. The first and second parts (or electrical connectors) may be arranged such that they can rotate relative to each other without breaking the electrical connection between the first and second parts.

At least one of the first and second electrical connectors may be rotationally symmetric. At least one of the first and second electrical connectors may be axi-symmetric. One of the first and second electrical connectors may be arranged to receive and engage the other of the first and second electrical connector at any relative angular position. As such, the rotational orientation of the first electrical connector relative to the second electrical connector may be irrelevant when connecting the first and second electrical connectors. The first electrical connector may be configured to engage and electrically connect with the second electrical connector regardless of the rotational orientation of the second electrical connector relative to the first electrical connector.

At least one of the first and second electrical connectors may be axi-symmetric such that the first and second electrical connectors can provide an electrical connection between the first and second parts when the second part is at any angular position relative to the first part.

An axi-symmetric electrical connector allows an electrical connection to be made regardless of the relative angular orientation of the electrical connectors.

One of the first and second electrical connectors may comprise a cylindrical pin connector. The other of the first and second electrical connectors may comprise a socket for receiving the pin connector. The pin connector and socket may be configured to provide an electrical connection at any relative angular position between the socket and pin connector.

The pin and socket may be arranged according to similar principles as used in many domestic kettle base units. The socket may be configured to receive the pin connector at any relative rotational orientation and provide an electrical connection between the first and second parts.

In an alternative embodiment, one of the first and second electrical connectors may comprise an electrical contact strip. The other of the first and second electrical connectors may comprise an electrical contact brush for engaging the contact strip. The contact strip and contact brush may be configured to provide an electrical connection regardless of the relative angular positions between the contact strip and contact brush.

In some embodiments, the mechanical connectors may be the same components as the electrical connectors. As such, the first and second mechanical connectors may be the first and second electrical connectors respectively. The second mechanical connector may be arranged to engage the first mechanical connector and provide an electrical connection between the first and second parts as the first and second mechanical connectors engage.

The first and second electrical connectors may engage (e.g. one of the first and second electrical connector may be received in the other electrical connector) as soon as the first and second mechanical connectors begin to engage. This provides an electrical connection between the first part and the second part.

One of the first and second parts may have a trunk. The trunk may protrude from a base plate of the part. A corresponding electrical connector may be located in the trunk. The other of the first and second parts may have an aperture; wherein the aperture is arranged to receive the trunk and the first and second electrical connections are arranged to engage when the trunk is received in the aperture.

The trunk and aperture may be arranged such that an electrical connection between the first and second parts is provided as soon as the first and second mechanical connectors begin to engage, and so that an electrical connection is maintained throughout the engagement of the first and second mechanical connectors.

The light fitting may further comprise a catch for preventing inadvertent separation of the first and second parts.

A catch may be a safety feature such that the first and second parts cannot separate without user intervention. The catch may prevent separation of the first and second parts due to the weight of the light pulling the second part to disengage from the first part. A catch may be arranged to prevent inadvertent separation at the point immediately prior to separation - as such, the first and second parts may still be able to move relative to each other before the catch prevents further relative movement.

The first and second mechanical connectors may comprise a screw thread. The first and second parts may therefore be screwably engageable.

A screw thread may be arranged on the outside of the trunk of one of the first and second parts, arranged to mate with a protrusion or helical slot on the inside of an aperture on the other of the first and second part.

The mechanical connectors may define a plurality of discrete relative positions in which the first and second parts can be arranged.

The plurality of discrete relative positions is arrangements in which a light can be stably supported with the first part and second part mechanically and electrically connected. The plurality of discrete relative positions provides arrangements of the first and second part in which they are mechanically and electrically connected and cannot be disconnected without user intervention.

The plurality of discrete relative positions may be arranged to define a plurality of different distances between the second part and a surface on which the first part is arranged to be connected.

The plurality of discrete relative positions may be graduated. The plurality of discrete relative positions may define a plurality of different spacings between the second part and a surface on which the first part is arranged to be connected. The plurality of discrete relative positions may define a plurality of different positions in a plane parallel to the surface at which the second part can be located relative to the first part.

The plurality of discrete relative positions may provide a plurality of different positions or heights at which a light supported by the fitting can be hung.

The plurality of discrete relative positions may be defined by at least one recess on one of the first and second mechanical connectors mating with at least one projection on the other of the first and second mechanical connectors.

A notch and recess may be located on the outside or inside surface of the trunk or aperture, respectively.

The plurality of discrete relative positions may be defined by a surface feature on one of the mechanical connectors arranged to engage or interact with a surface feature of the other mechanical connector. The plurality of discrete relative positions may be provided by a plurality of detents which resist relative rotation of the first and second parts.

A catch may comprise a mechanical fastener, clip or clasp. A catch may comprise a protrusion on one of the first and second parts arranged to mate with a recess on the other of the first and second parts.

A catch may comprise a notch in the screw thread on one of the first and second mechanical connectors configured to engage a protrusion on the other of the first and second mechanical connectors.

A notch may comprise an indent in the upper surface of a screw thread. The notch may be arranged to receive and engage a protrusion which is arranged to ride along the top of the screw thread as the first and second parts are mechanically engaged and disengaged. The notch and protrusion may be arranged such that in order to disengage the notch and protrusion, or in order to prevent the protrusion from engaging the notch, the weight of a light and the second part must be supported such that the second part can be partially lifted as the protrusion traverses the notch.

One of the first part and second part may comprise a spring-loaded member or ball and the other of the first part and second part may comprise a surface feature, for example a hole, notch, lip or recess for engaging the spring-loaded member or ball and resisting relative movement of the first and second parts. The member or ball may be biased towards the surface feature of the second part by the spring. The spring-loaded member or ball and surface feature may be arranged on the mechanical connector of the respective part so as to engage when the first part is engaged with the second part.

A plurality of spring-loaded members or balls and/or surface features may be provided. A spring-loaded member or ball and surface feature may be arranged to provide tactile feedback at one, or a plurality of the discrete relative positions. The spring-loaded member or ball and surface feature may be arranged such that they engage when an electrical connection is first provided between the first and second parts as the first mechanical connector engages the second mechanical connector. The spring-loaded member or ball and surface feature may provide tactile feedback to a user. The tactile feedback may inform a user that an electrical connection is provided between the first and the second part.

One of the first and second mechanical connectors may comprise a slot and the other of the first and second mechanical connectors comprises a peg configured to mate with the slot.

A peg may substantially be a dowel or member protruding from a surface of the respective part. The peg and slot may be configured such that the peg can only enter and leave the slot at a specific location. The peg and slot may be arranged such that the peg can slide along the length of the slot, for example in response to relative movement of the first and second members. A peg may have a stem which is narrower in diameter than its head.

The peg and slot may be arranged such that the second part may be moved into abutment with the first part, the pegs entering the slots at a first end of the slots. The second part may then be rotated relative to the first part and the pegs may traverse the slot and enter an area of the slot in which they are unable to leave the slot.

According to a further embodiment is a light apparatus comprising:
a bulb socket for receiving a bulb;
a power circuit for a light for supplying power to the bulb socket; and
a light fitting connected to the power circuit for connecting the power circuit to a power supply;
   wherein the light fitting comprises:
   a first part for connecting to a surface; the first part comprising:
      a first electrical connector; and
      a first mechanical connector;
   a second part connected to the power circuit; the second part comprising:
      a second electrical connector;
         wherein the second electrical connector is electrically connected to the power circuit; and
      a second mechanical connector arranged to releasably engage the first mechanical connector; wherein
   the first electrical connector and second electrical connector are arranged to engage to provide an electrical connection between the first and second parts as the first and second mechanical connectors engage; and
   the light fitting is arranged such that an electrical connection between the first and second parts can be provided when the second part is at any of a plurality of positions relative to the first part.

According to a further embodiment is a light apparatus comprising:
a bulb socket;
a power circuit for a light for supplying power to the bulb socket; and
a light fitting part connected to the power circuit;
   the light fitting part comprising:
      an electrical connector;
         wherein the electrical connector is electrically connected to the power circuit; and
      a mechanical connector arranged to releasably engage a further mechanical connector of a further light fitting part connected to a surface;
   wherein the electrical connector is arranged to engage a further electrical connector on the further light fitting part to provide an electrical connection between the light fitting part and the further light fitting part as the mechanical connector and further mechanical connector engage; and
   the electrical connector is arranged such that an electrical connection between the light fitting part and the further light fitting part can be provided when the light fitting part is at any of a plurality of positions relative to the further light fitting part.

In accordance with the above embodiment, a light fitting or a light fitting part as described anywhere herein may be permanently attached to a power circuit for a light and may form part of the light apparatus per se.

Discussion relating to any features which are common between embodiments applies to all embodiments, mutatis mutandis.

A light fitting part for connecting to a light may comprise:
an electrical interface configured to be releasably coupled to a power circuit for a light;
an electrical connector;
   wherein the second electrical connector is arranged to be electrically connected to the electrical interface for supplying power to the light; and
a mechanical connector arranged to engage a further mechanical connector of a further light fitting part connected to a surface;
wherein the electrical connector is arranged to engage a further electrical connector on the further light fitting part to provide an electrical connection between the light fitting part and the further light fitting part as the mechanical connector and further mechanical connector engage; and
the electrical connector is arranged such that an electrical connection between the light fitting part and the further light fitting part can be provided when the light fitting part is at any of a plurality of positions relative to the further light fitting part.

A light fitting part according to an embodiment may be according to discussion relating to the second part as described anywhere herein. Discussion relating to the light fitting applies, mutatis mutandis, to that of the light fitting part.

According to a further embodiment is a light comprising a light fitting as described anywhere herein.

According to a further embodiment is a light comprising a light fitting part as described anywhere herein.

According to a further embodiment is a light comprising a light fitting part as described anywhere herein.

According to a further embodiment is a method for connecting a light fitting as described herein, the method comprising connecting the first part to the second part by engaging the first and second mechanical connectors.

These and other preferred features of the present invention will now be described in further detail with reference to the accompanying drawings.

### DESCRIPTION OF DRAWINGS

Figure 1 is a side view of a light fitting according to an embodiment installed on a surface and connected to a light;
Figure 1A is an exploded view of the embodiment of figure 1;
Figure 2 is a further exploded view of the embodiment of figure 1;
Figure 3 is a perspective view of a further light fitting according to an embodiment connected to a light;
Figure 3A is an exploded view of the embodiment of figure 3;
Figure 4 is a further exploded view of the embodiment of figure 3;
Figure 5 is a plan view of the embodiment of figure 3;
Figure 6 is a perspective view of electrical connectors according to an embodiment;
Figure 7 is a view of a further embodiment according to an embodiment;
Figure 8 is a side view of the embodiment of figure 7 installed on a surface and connected to a light;
Figure 9 is a side view of a further embodiment according to the present invention in a separated arrangement;
Figure 10 is a perspective view of the embodiment of figure 9 in a connected arrangement;
Figure 11 is a further perspective view of the embodiment of figure 9 in a connected arrangement;
Figure 12 is an end view of the embodiment of figure 9;
Figure 13 is a further end view of the embodiment of figure 9;
Figure 14 is a first cross-section view of the embodiment of figure 9; and
Figure 15 is a second cross-section view of the embodiment of figure 9.

### DESCRIPTION OF SPECIFIC EMBODIMENTS

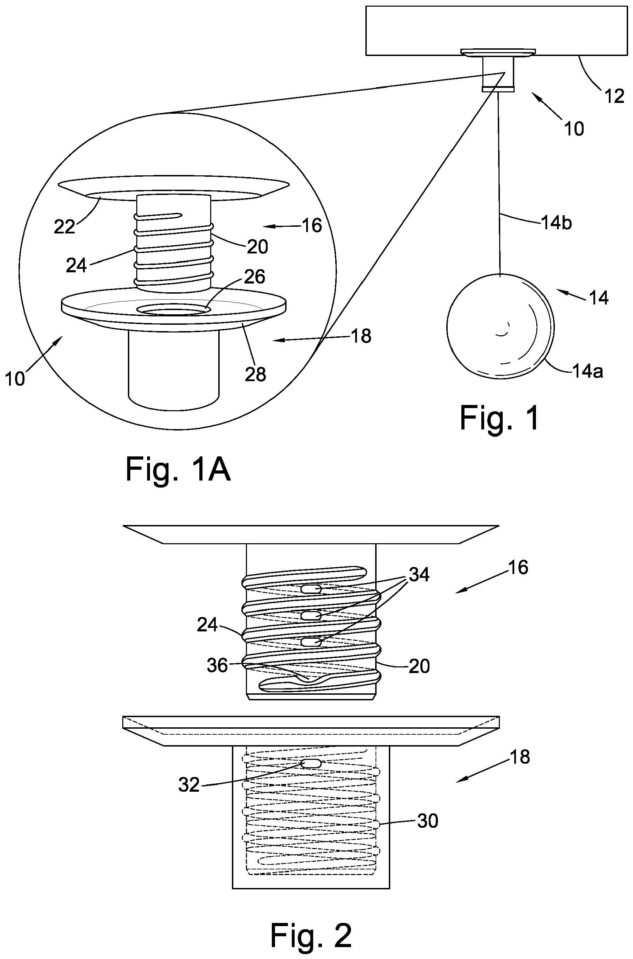

Figures 1 and 1A illustrate a light fitting 10 according to the present disclosure. The light fitting 10 connects a light 14 both mechanically and electrically to a domestic ceiling 12. The light 14 comprises a light bulb and lamp shade 14a connected to a power cord 14b. The power cord 14b is wired into the light fitting 10 and provides a mechanical and electrical connection between the light fitting 10 and the light bulb and lamp shade 14a.

The light fitting 10 comprises a first part 16 and a second part 18, both of which are substantially disc-shaped. The first part 16 is attached to the ceiling 12. This can be achieved by means of screws in a manner similar to how existing light fittings are connected to a ceiling 12. The first part 16 is configured to interface and connect to existing mechanical fixing means in the ceiling, e.g. the first part 16 can be attached to the ceiling 12 by inserting screws into existing screw holes around the electrical connections in the ceiling 12.

The second part 18 is connected to the power cord 14b. The power cord 14b is wired into the second part 18 in a similar way to how a light power cord would be connected to a standard domestic light fitting. As such, the second part 18 comprises an electrical interface as would be known in the art for connecting light circuity to a domestic power supply.

The electrical connection between the power cord 14b and the second part 18 also provides the mechanical connection which fixes the light 14 relative to the second part 18. This allows the light 14 to hang from the light fitting. In other embodiments, however, the second part may comprise a separate connection means or device for mechanically supporting the light.

The first mechanical connector comprises a central cylindrical trunk 20 projecting from a substantially flat base plate 22 of the first part 16. A screw thread 24 projects from the circumference of the trunk 20.

The second part 18 comprises a base plate 28 shaped to conform with the base plate 22 of the first part 16. The second part 18 further comprises a second mechanical connector for engaging the first mechanical connector. First and second mechanical connectors prevent the first and second parts from being separated by being pulled in opposing directions. The second mechanical connector comprises an aperture 26 arranged to receive the trunk 20. The aperture 26 comprises a screw thread slot 30 on the inside curved surface of the aperture 26, arranged to receive the screw thread 24 on the trunk 20, as can be seen in figure 2.

In the embodiment of figure 1, a first electrical connector is housed within the trunk 20 of the first part 16 and a second electrical connector is housed within the aperture 26 of the second part 18. Neither of these are visible the figures. The second electrical connector is connected to the electrical interface so that electrical power can be transferred from the second electrical connector to the light.

One of the first and second electrical connector is a pin connector and the other of the first and second electrical connector is a socket for receiving the pin connector. The pin and socket connectors are axi-symmetric, wherein an axis extends down the centre of the trunk 20 and aperture 26, perpendicular to the surface of the ceiling 12. As such, the pin and socket connectors allow the first 16 and second 18 parts to be electrically connected, irrespective of the relative angular positions of the two parts, provided the pin is received in the socket.

In use, the first part 16 is electrically connected to the domestic power supply and fixed to the ceiling. The second part 18 is mechanically and electrically connected to the light 14. The second part 18 is then simply screwed onto the first part 16.

In the embodiment of figure 1, the pin connector is received in the socket as soon as the trunk 20 enters the aperture 26. This provides an electrical connection between the first part 16 and the second part 18. The electrical connectors are arranged such that an electrical connection between the first 16 and second parts 18 can be maintained, even if the second part 18 rotates relative to the first part 16. As such, as the second part 18 is screwed onto the first part 16, the first part 16 and second part 18 are electrically connected.

As the second part 18 is screwed onto the first part 16 the second part 18 moves towards the first part 16. The second part 18 therefore moves higher (closer to the ceiling 12) as it is screwed further onto the first part 16. The height at which the light 14 is suspended can therefore be customised by changing the relative spacing between the first part 16 and the second part 18, by managing by how many turns the second part 18 is screwed onto the first part 16.

The embodiment of figure 1 further defines a plurality of discrete relative positions in which the first and second parts can be arranged. These discrete relative positions define a plurality of spacings between the base plate of the first and second parts and thus define a plurality of heights at which the light 14 can be hung.

As shown in figure 2, the plurality of discrete relative positions are defined by a projection in the form of a nodule 32 arranged to be engageable with one of a plurality of recesses 34. The nodule 32 is positioned on an inside surface of the aperture 26 and the recesses are located on the trunk 20 at a plurality of different locations of the screw thread 24, at varying distances from the base plate 22. As the second part 18 is screwed onto the first part 16, the nodule 32 sequentially clicks into each of the recesses 34. A user can decide to leave the nodule 32 located in any one of the recesses 34 once the light 14 is suspended at the correct height and the mating of the nodule 32 and recess 34 prevents the second part 18 from unscrewing from the first part 16 due to the weight of the light 14.

The embodiment further comprises a catch 36 for preventing inadvertent separation of the first and second parts. In figure 2, the catch 36 can be seen - a notch 36 in the surface of the screw thread 24 of the first part 16. The notch 36 is arranged at the lower end of the screw thread 24, to prevent total separation of the first and parts in the unlikely event that the second part 18 begins to unscrew itself from the first part 16. The notch 36 is arranged to engage a protrusion on the second part 18 and prevent relative movement of the first part 16 and second part 18. In the embodiment of figure 1, the protrusion with which the notch 36 engages is the nodule 32.

If the second part 18 were to be unscrewed from the first 16 under the action of gravity, before total separation of the first and second parts, the nodule 32 would be caught by the notch 36. Gravity would pull the nodule 32 further into the notch 36. As such, the first part 16 and second part 18 would be unable to separate completely.

In order to separate the first part 16 and second part 18, a user is required to support the weight of the light 14 so that the second part 18 can be lifted to allow the nodule 32 to travel over the top of the notch 36 without being engaged thereby.

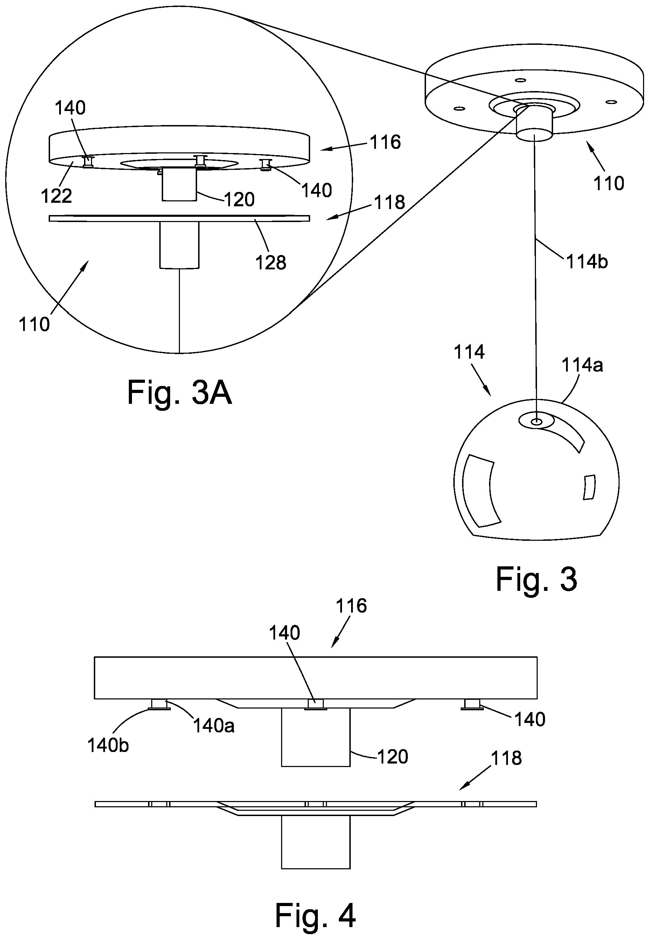

Figures 3 to 5 illustrates a further embodiment 110 supporting a light 114 comprising a bulb and lamp shade assembly 114a connected to the light fitting 110 by a power cable 114b.

As with the light fitting of figure 1, the light fitting 110 comprises a first part 116 and a second part 118, both of which are substantially disc-shaped. The first part comprises a base plate 122 from which a trunk 120 projects. The trunk 120 houses a first electrical connector. The second part 118 also comprises a base plate 128 from which a trunk projects, the trunk of the second part 118 defining an aperture in which the trunk 120 of the first part 116 can be received. The aperture of the second part 118 houses the second electrical connector, which is arranged to engage the first electrical connector and electrically connect the first and second parts 116 and 118.

One of the first and second electrical connector is a pin connector and the other of the first and second electrical connector is a socket for receiving the pin connector. The pin and socket connectors are axi-symmetric, wherein the axis extends down the centre of the trunk 120 and aperture. The first and second electrical connectors allow the first 116 and second 118 parts to be electrically connected, irrespective of the relative angular positions of the two parts, provided the pin is received in the socket.

The pin connector is received in the socket as soon as the trunk 120 of the first part 116 enters the aperture of the second part 118. This provides an electrical connection between the first part 116 and the second part 118. The electrical connectors are arranged such that an electrical connection between the first 116 and second parts 118 can be maintained, even if the second part 118 rotates relative to the first part 116.

The first part 116 has a first mechanical connector. The first mechanical connector of the present embodiment comprises four pegs 140 which project perpendicular to the base plate 122 of the first part 116. Each peg comprises a stem 140a and a flat circular head 140b which circumferentially projects out from the stem. The four pegs are evenly spaced around the base plate 122 of the first part 116.

The second part 118 has a second mechanical connector. The second mechanical connector of the present embodiment comprises four slots 150 arranged through the base plate 128 of the second part 116, corresponding to the locations of the four pegs 140. The width of the slots 150 is chosen such that it is larger than the diameter of the stem 140a of the pegs 140, but smaller than the diameter of the head 140b. Each slot 150 comprises an enlarged end section with a larger slot width, chosen to be larger than the head 140b of the slot. As such, the second part 118 can be brought into engagement with the first part 116 by aligning the four pegs 140 with the enlarged sections of the slots 150 and inserting the pegs 140 through the enlarged sections. The second part 118 can then be rotated relative to the first part 116 such that the stems 140a of the pegs 140 slide along the length of the slots 150. Since the diameter of the heads 140b of the stems 140 are larger than the width of the slots 150, the first part 116 and second part 118 can no longer be pulled apart.

In order to separate the first and second parts, the second part 118 must be rotated relative to the first part 116 to align the pegs 140 with the enlarged section of the slots 150, before withdrawing the second part 118 from the first part 116.

The first and second electrical connectors engage and provide an electrical connection between the first part 116 and second part 118 as soon as the trunk 120 of the first part 116 enters the aperture of the second part 118. As such, an electrical connection may be present between the first and second parts throughout the above rotation step.

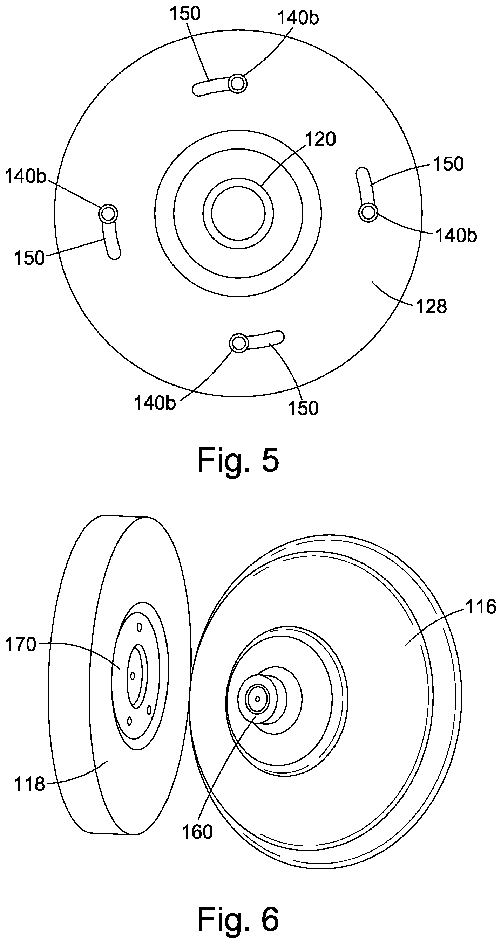

Figure 6 illustrates a first electrical connector 160 and second electrical connector 170 according to an embodiment. The first and second electrical connectors 160 and 170 of figure 6 comprise a pin and socket connector. Both the first and second electrical connectors 160 and 170 are axisymmetric. As such, an electrical connection between the first and second parts 116 and 118 can be maintained when the second part 118 rotates relative to the first part 116 about the electrical connectors.

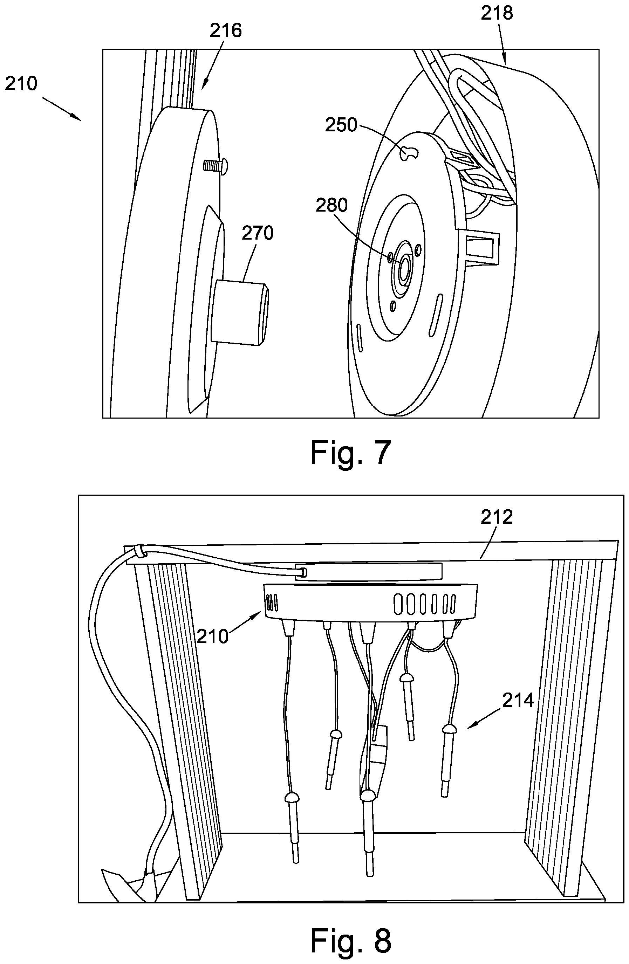

Figure 7 illustrates a further embodiment of a light fitting 210. The light fitting comprises a first part 216 and a second part 218. The first part 216 comprises a first electrical connector 270 and the second part 218 comprises a second electrical connector 280. The first and second electrical connectors comprise an axi-symmetric pin and socket. The first and second electrical connectors 270 and 280 are configured to provide an electrical connection between the first and second parts 216 and 218 regardless of the relative angular orientation between the first and second parts 270 and 280.

The first part comprises a first mechanical connector in the form of a peg 240. The second part comprises a second mechanical connector in the form of a slot 250. The peg 240 and slot 250 are configured to engage to affix the second part 218 relative to the first part 216 in a similar manner as described with reference to the embodiment of figure 3.

Figure 8 illustrates the light fitting of figure 7 attached to a surface 212, supporting a light 214.

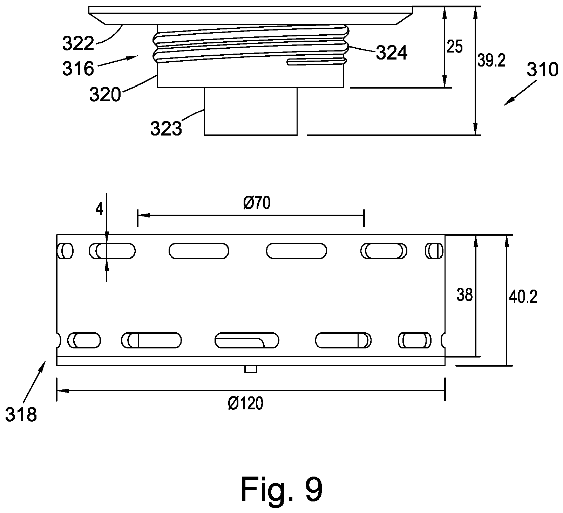

Figure 9 illustrates a light fitting 310 according to the present disclosure. The light fitting 310 comprises a first part 316 and a second part 318, both of which are substantially circular when viewed in plan. The first part 316 can be attached to the ceiling, a wall or any other surface. This can be achieved by means of fixing holes 317 through which screws can be inserted and attached to the surface.

The second part 318 is connectable to the power circuit (e.g. a power cord) of a light by means of an electrical interface (for example, standard electrical wire connections for connecting to a power cable).

The first part 316 comprises a mechanical connector comprising a central cylindrical trunk 320 projecting from a substantially flat base plate 322 of the first part 16. A screw thread 324 projects from the curved outer surface, i.e. the circumference, of the trunk 320. The screw thread 324 is a single-helix screw thread in the described embodiment.

The first part 316 also comprises a first electrical connector 323. The first electrical connector 323 comprises a trunk or cylindrical section which protrudes from the end of the mechanical connector trunk 320. The first electrical connector 323 is arranged to contact a second electrical connector, located in the second part 318, so as to provide an electrical connection between the first and second parts, when the first and second parts engage by way of the first and second mechanical connectors.

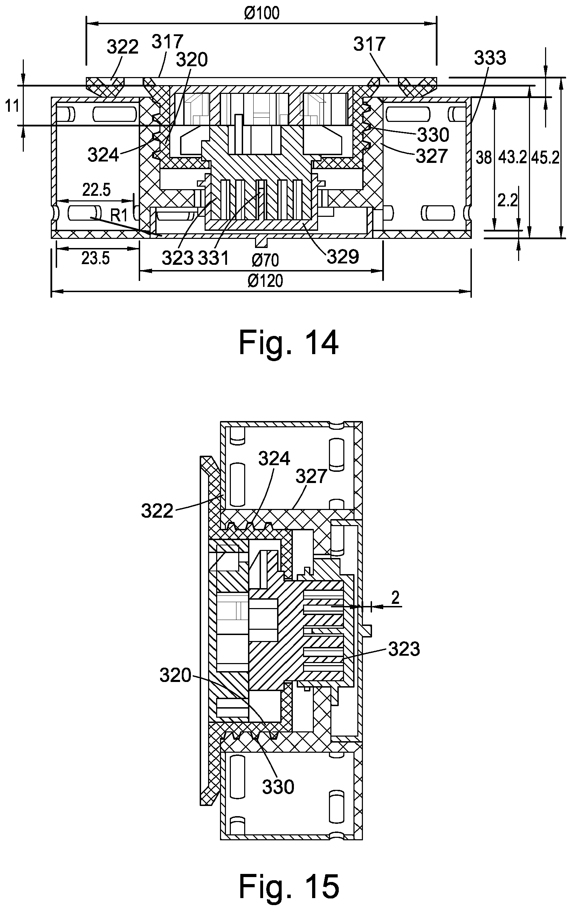

The end surface of the first electrical connector 323 (that is the surface furthest from a surface on which the light fitting is attached) comprises recesses in which electrical contacts are provided. These will be discussed further with reference to figures 14 and 15.

The second part 318 is substantially cylindrical and is arranged to receive, or be attached to the first part 316. In figure 9, the first and second parts are shown separated but aligned, as they might be before the second part is attached to the first part.

Exemplar dimensions of the first part 316 and second part 316 are illustrated on figure 9. All of the dimensions illustrated in any of figures 9 to 15 are millimetres.

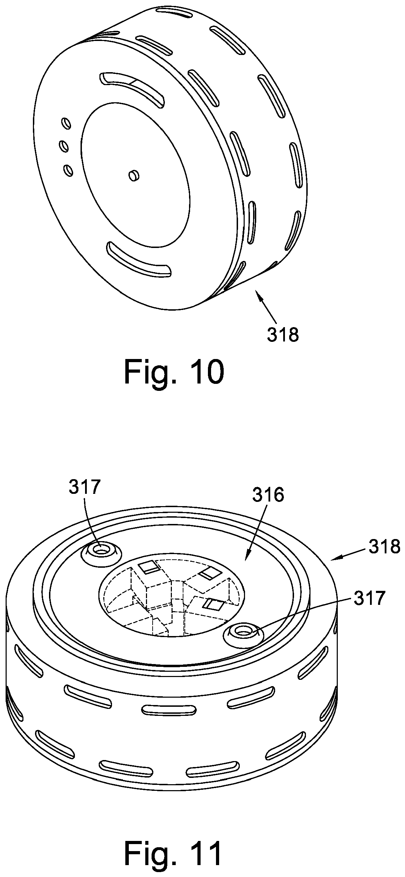

Turning now to figures 10 and 11, the embodiment of figure 9 can be seen in a connected, or engaged, arrangement. In figures 10 and 11 the first part 316 and second part 318 are engaged by means of the first and second mechanical connectors. The first part 316 is located almost entirely within the second part 318.

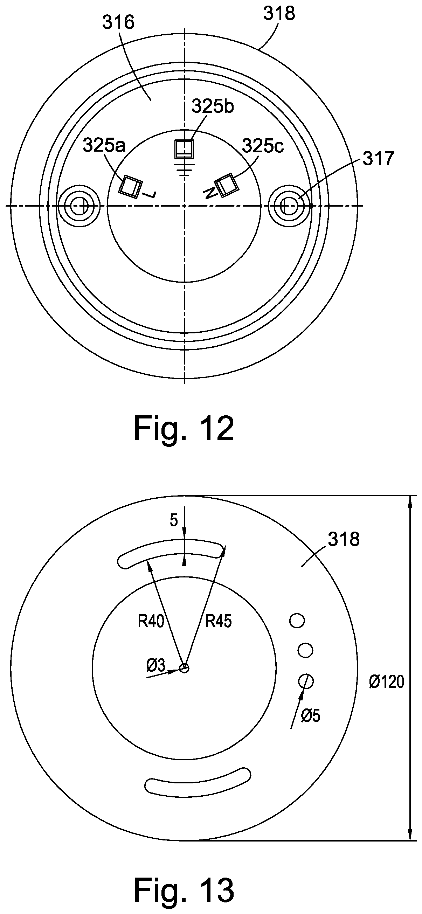

Figure 12 depicts the surface-mountable side of the light fitting 310. The first part 316 comprises holes 317 for receiving screws or bolts, allowing the first part 316 to be mounted directly onto a surface. The second part 318 can be removably attached to the first part 316, and thus the surface.

On the bottom of the first part 316 are electrical ports 325 for electrically connecting the first part 316 to a power supply for a light, e.g. a domestic power supply. The electrical ports 325 comprise a connection for a live 325a, earth 325b and neutral 325c wire. The electrical ports 325 of the present embodiment may be identical, or similar to, the electrical interface for connecting the second part 318 to a light, or a power supply for a light.

Figure 13 depicts the surface of the device distal from a surface on which the light fitting 310 can be mounted. Figure 13 depicts attachment means which can be used to fix a light to the light fitting 310.

Turning now to figures 14 and 15, two cross sections of the light fitting 310 are depicted. In figures 14 and 15, the first part 316 and second part 318 are shown in an engaged arrangement, such that an electrical connection is provided between the first part 316 and the second part 318.

The second part 318 comprises a second mechanical connector for engaging the first mechanical connector. First and second mechanical connectors prevent the first and second parts from being separated by being pulled in opposing directions. The second mechanical connector comprises a collar 327 or tube arranged to receive and surround the first mechanical connector i.e. the trunk 320. The collar 327 comprises a helical slot defining a screw thread slot 330 on the inside curved surface of the collar 327, arranged to engage the screw thread 324 of the trunk 320, as can be seen in figures 14 and 15.

The second part 318 further comprises a second electrical connector 329. The second electrical connector 329 is arranged to engage with the first electrical connector 323 to provide an electrical contact between the first part 316 and the second part 318 when the first and second mechanical connectors are engaged. The second electrical connector 329 comprises a contact core 331 in the form of a protruding prong. This contact core is arranged to be insertable into the first electrical connector 323 to provide an electrical contact with the first electrical connector 323.

The first and second electrical connectors are arranged such that they can be rotated relative to each other while maintaining an electrical contact (i.e. an electrical connection is provided with the first and second parts at a continuous range of relative positions). In the present embodiment, this is achieved by means of the geometry of the first and second electrical connectors. In the present embodiment, the electrical connectors, and in particular the electrical contacts thereof, are largely axisymmetric and the contact core 331 can contact an electrical contact sheath in the first electrical connector 323 at any angular position.

In order to electrically and mechanically connect the first part 316 and second part 318, the second part 318 is located substantially coaxially with the first part 316 and moved into engagement with the first part 316. The trunk 320 of the first part 316 enters the collar 327 of the second part 318. The screw thread 324 of the trunk 320 engages the helical slot 330 of the collar 327 and the second part 318 approaches the first part 316 as the second part 318 is rotated relative to the first part 316. As the screw thread 324 on the trunk 320 progresses up the slot 330 on the inside of the collar 327, the two parts 316 318 move towards each other and the first electrical connector 323 is brought into connection with the second electrical connector 329 by means of the contact core 331 entering the first electrical connector 323.

Both the first and second electrical connectors 323 329 are substantially axi-symmetric, about an axis extending down the centre of the trunk 320. As such, the first 316 and second 318 parts can be electrically connected irrespective of the relative angular positions of the two parts, provided the contact core 331 is received in the first electrical connector 323.

The embodiment of figures 14 and 15 also comprise a toroidal space, formed within the second part 318 between the outer surface of the collar 327 and the inner surface of an outer cover 333. This toroidal space may be suitable for housing a toroidal transformer.

While certain embodiments have been described, these embodiments have been presented by way of example only, and are not intended to limit the scope of the invention. Indeed, the novel methods, devices and systems described herein may be embodied in a variety of forms; furthermore, various omissions, substitutions and changes in the form of the methods and systems described herein may be made. The accompanying claims and their equivalents are intended to cover such forms or modifications as would fall within the scope of the invention defined by the claims.

## Claims

1. A light fitting (10) comprising:
a first part (16) for connecting to a surface; the first part (16) comprising:
a first electrical connector; and
a first mechanical connector;
a second part (18) for connecting to a light; the second part (18) comprising:
an electrical interface configured to be releasably coupled to a power circuit for a light;
a second electrical connector;
wherein the second electrical connector is arranged to be electrically connected to the electrical interface for supplying power to the light; and
a second mechanical connector arranged to releasably engage the first mechanical connector; wherein
the first electrical connector and second electrical connector are arranged to engage to provide an electrical connection between the first and second parts (16, 18) as the first and second mechanical connectors engage;
the light fitting is arranged such that an electrical connection between the first and second parts (16, 18) can be provided when the second part is at any of a plurality of positions relative to the first part (16); and
the first and second mechanical connectors comprise a screw thread (24) and define a plurality of discrete relative positions in which a light can be supported with the first part (16) and second part (18) mechanically and electrically connected, and the plurality of discrete relative positions are arranged to define a plurality of different distances between the second part (18) and a surface on which the first part is arranged to be connected.

2. A light fitting according to any preceding claim, wherein the first and second parts (16, 18) are rotatably engagable.

3. A light fitting according to any preceding claim, wherein the light fitting is arranged such that an electrical connection between the first and second parts (16, 18) can be provided when the second part (18) is at any of a plurality of angular positions relative to the first part.

4. A light fitting according to any preceding claim, wherein the first and second electrical connectors are configured such that an electrical connection between the first and second parts (16, 18) can be provided when the second electrical connector is at any of a plurality of relative angular positions relative to the first electrical connector.

5. A light fitting according to any preceding claim, wherein at least one of the first and second electrical connectors is axi-symmetric such that the first and second electrical connectors can provide an electrical connection between the first and second parts (16, 18) when the second part (18) is at any angular position relative to the first part (16).

6. A light fitting according to any preceding claim, wherein one of the first and second parts (16, 18) comprises a trunk (20) in which a respective electrical connector is located, and the other of the first and second parts (16, 18) comprises an aperture (26); wherein the aperture (26) is arranged to receive the trunk (20) and the first and second electrical connections are arranged to engage when the trunk (20) is received in the aperture (26).

7. A light fitting according to any preceding claim, wherein the light fitting further comprises a catch (36) for preventing inadvertent separation of the first and second parts (16, 18).

8. A light fitting according to claim 7, wherein the first and second mechanical connectors comprise a screw thread (24) and the catch (36) comprises a notch in the screw thread (24) on one of the first and second mechanical connectors configured to engage a protrusion on the other of the first and second mechanical connectors.

9. A light apparatus comprising:
a bulb socket;
a power circuit for a light for supplying power to the bulb socket; and
a light fitting according to claim 1, wherein the second part is connected to the power circuit.

10. A method for connecting a light fitting according to any of claims 1 to 8, the method comprising connecting the first part to the second part by engaging the first and second mechanical connectors.

## Patentansprüche

1. Leuchtenfassung (10), die Folgendes umfasst:
einen ersten Teil (16) zum Verbinden mit einer Oberfläche, wobei der erste Teil (16) Folgendes umfasst:
einen ersten elektrischen Verbinder; und
einen ersten mechanischen Verbinder;
einen zweiten Teil (18) zum Verbinden mit einer Leuchte, wobei der zweite Teil (18) Folgendes umfasst:
eine elektrische Anschlussstelle, die dafür konfiguriert ist, lösbar mit einem Stromkreis für eine Leuchte verbunden zu werden;
einen zweiten elektrischen Verbinder;
wobei der zweite elektrische Verbinder dafür angeordnet ist, zum Zuführen von Energie zu der Leuchte elektrisch mit der elektrischen Anschlussstelle verbunden zu werden; und
einen zweiten mechanischen Verbinder, der dafür angeordnet ist, lösbar den ersten mechanischen Verbinder in Eingriff zu nehmen; wobei
der erste elektrische Verbinder und der zweite elektrische Verbinder dafür angeordnet sind, ineinanderzugreifen, um eine elektrische Verbindung zwischen dem ersten und dem zweiten Teil (16, 18) bereitzustellen, wenn der erste und der zweite mechanische Verbinder ineinandergreifen;
die Leuchtenfassung derart angeordnet ist, dass eine elektrische Verbindung zwischen dem ersten und dem zweiten Teil (16, 18) bereitgestellt werden kann, wenn sich der zweite Teil an einer beliebigen von mehreren Positionen im Verhältnis zu dem ersten Teil (16) befindet; und
der erste und der zweite mechanische Verbinder ein Schraubengewinde (24) umfassen und mehrere diskrete relative Positionen definieren, in denen eine Leuchte getragen werden kann, wobei der erste Teil (16) und der zweite Teil (18) mechanisch und elektrisch verbunden sind, und die mehreren diskreten relativen Positionen dafür angeordnet sind, mehrere unterschiedliche Abstände zwischen dem zweiten Teil (18) und einer Oberfläche zu definieren, an welcher der erste Teil angeordnet ist, um verbunden zu werden.

2. Leuchtenfassung nach einem der vorhergehenden Ansprüche, wobei der erste und der zweite Teil (16, 18) drehbar in Eingriff gebracht werden können.

3. Leuchtenfassung nach einem der vorhergehenden Ansprüche, wobei die Leuchtenfassung derart angeordnet ist, dass eine elektrische Verbindung zwischen dem ersten und dem zweiten Teil (16, 18) bereitgestellt werden kann, wenn sich der zweite Teil (18) an einer beliebigen von mehreren Winkelpositionen im Verhältnis zu dem ersten Teil befindet.

4. Leuchtenfassung nach einem der vorhergehenden Ansprüche, wobei der erste und der zweite elektrische Verbinder derart konfiguriert sind, dass eine elektrische Verbindung zwischen dem ersten und dem zweiten Teil (16, 18) bereitgestellt werden kann, wenn sich der zweite elektrische Verbinder an einer beliebigen von mehreren relativen Winkelpositionen im Verhältnis zu dem ersten elektrischen Verbinder befindet.

5. Leuchtenfassung nach einem der vorhergehenden Ansprüche, wobei wenigstens einer von dem ersten und dem zweiten elektrischen Verbinder derart axialsymmetrisch ist, dass der erste und der zweite elektrische Verbinder eine elektrische Verbindung zwischen dem ersten und dem zweiten Teil (16, 18) bereitstellten können, wenn sich der zweite Teil (18) an einer beliebigen Winkelposition im Verhältnis zu dem ersten Teil (16) befindet.

6. Leuchtenfassung nach einem der vorhergehenden Ansprüche, wobei der eine von dem ersten und dem zweiten Teil (16, 18) einen Schacht (20) umfasst, in dem ein jeweiliger elektrischer Verbinder angeordnet ist, und der andere von dem ersten und dem zweiten Teil (16, 18) eine Öffnung (26) umfasst; wobei die Öffnung (26) dafür angeordnet ist, den Schacht (20) aufzunehmen und die erste und die zweite elektrische Verbindung dafür angeordnet sind, ineinanderzugreifen, wenn der Schacht (20) in der Öffnung (26) aufgenommen wird.

7. Leuchtenfassung nach einem der vorhergehenden Ansprüche, wobei die Leuchtenfassung ferner eine Raste (36) zum Verhindern einer unbeabsichtigten Trennung des ersten und des zweiten Teils (16, 18) umfasst.

8. Leuchtenfassung nach Anspruch 7, wobei der erste und der zweite mechanische Verbinder ein Schraubengewinde (24) umfassen und die Raste (36) eine Kerbe in dem Schraubengewinde (24) an dem einen von dem ersten und dem zweiten mechanischen Verbinder umfasst, die dafür konfiguriert ist, einen Vorsprung an dem anderen von dem ersten und dem zweiten mechanischen Verbinder in Eingriff zu nehmen.

9. Beleuchtungsvorrichtung, die Folgendes umfasst:
eine Glühlampenfassung;
einen Stromkreis für eine Leuchte zum Zuführen von Energie zu der Glühlampenfassung; und
eine Leuchtenfassung nach Anspruch 1, wobei der zweite Teil mit dem Stromkreis verbunden ist.

10. Verfahren zum Anschließen einer Leuchtenfassung nach einem der Ansprüche 1 bis 8, wobei das Verfahren das Verbinden des ersten Teils mit dem zweiten Teil durch In-Eingriff-Bringen des ersten und des zweiten mechanischen Verbinders umfasst.

## Revendications

1. Luminaire (10) comprenant:
une première partie (16) à raccorder à une surface ; la première partie (16) comprenant :
un premier connecteur électrique ; et
un premier connecteur mécanique ;
une seconde partie (18) à connecter à une lumière ; la seconde partie (18) comprenant :
une interface électrique configurée afin d'être raccordée de manière amovible à un circuit électrique pour une lumière ;
un second connecteur électrique ;
dans lequel le second connecteur électrique est agencé afin d'être électriquement raccordé à l'interface électrique afin d'alimenter la lumière en électricité ; et
un second connecteur mécanique agencé afin de mettre en prise de manière amovible le premier connecteur mécanique ; dans lequel
le premier connecteur électrique et le second connecteur électrique sont agencés de manière à se mettre en prise afin de fournir une connexion électrique entre la première et la seconde partie (16, 18) lorsque le premier et le second connecteur mécanique se mettent en prise ;
le luminaire est agencé de sorte qu'une connexion électrique entre la première et la seconde partie (16, 18) peut être fournie lorsque la seconde partie est dans l'une quelconque d'une pluralité de positions relativement à la première partie (16) ; et
le premier et le second connecteur mécanique comprennent un filet de vis (24) et définissent une pluralité de positions relatives discrètes dans lesquelles une lumière peut être supportée avec la première partie (16) et la seconde partie (18) mécaniquement et électriquement connectées, et la pluralité de positions relatives discrètes sont agencées de manière à définir une pluralité de distances différentes entre la seconde partie (18) et une surface sur laquelle la première partie est agencée afin d'être raccordée.

2. Luminaire selon l'une quelconque des revendications précédentes, dans lequel la première et la seconde partie (16, 18) peuvent être mises en prise de manière rotative.

3. Luminaire selon l'une quelconque des revendications précédentes, dans lequel le luminaire est agencé de sorte qu'une connexion électrique entre la première et la seconde partie (16, 18) peut être fournie lorsque la seconde partie (18) est dans l'une quelconque des positions angulaires relativement à la première partie.

4. Luminaire selon l'une quelconque des revendications précédentes, dans lequel le premier et le second connecteur électrique sont configurés de sorte qu'une connexion électrique entre la première et la seconde partie (16, 18) peut être fournie lorsque le second connecteur électrique est dans l'une quelconque d'une pluralité de positions angulaires relativement au premier connecteur électrique.

5. Luminaire selon l'une quelconque des revendications précédentes, dans lequel au moins l'un du premier et second connecteurs électriques est axisymétrique, de sorte que le premier et le second connecteur électrique peuvent fournir une connexion électrique entre la première et la seconde partie (16, 18) lorsque la seconde partie (18) est dans n'importe quelle position angulaire relativement à la première partie (16).

6. Luminaire selon l'une quelconque des revendications précédentes, dans lequel une des première et seconde parties (16, 18) comprend un tronc (20) dans lequel un connecteur électrique respectif est situé, et l'autre des première et seconde parties (16, 18) comprend une ouverture (26) ; dans lequel l'ouverture (26) est agencée de façon à recevoir le tronc (20) et la première et la seconde connexion électrique sont agencées afin de se mettre en prise lorsque le tronc (20) est reçu dans l'ouverture (26).

7. Luminaire selon l'une quelconque des revendications précédentes, dans lequel le luminaire comprend en outre une prise (36) permettant de prévenir une séparation par inadvertance de la première et de la seconde partie (16, 18).

8. Luminaire selon la revendication 7, dans lequel le premier et le second connecteur mécanique comprennent un filet de vis (24) et la prise (36) comprend une encoche dans le filet de vis (24) sur l'un des premier et second connecteurs mécaniques configurée afin de mettre en prise une saillie sur l'autre des premier et second connecteurs mécaniques.

9. Luminaire comprenant :
une douille d'ampoule ;
un circuit électrique pour une lumière afin d'alimenter en électricité la douille d'ampoule ; et
un luminaire selon la revendication 1, dans lequel la seconde partie est raccordée au circuit électrique.

10. Procédé permettant de brancher un luminaire selon l'une quelconque des revendications 1 à 8, le procédé comprenant le branchement de la première partie à la seconde partie en mettant en prise le premier et le second connecteur mécanique.
